(19) Europäisches Patentamt
European Patent Office
Office européen des brevets

(11) **EP 4 546 280 A1**

(12) **EUROPEAN PATENT APPLICATION**
published in accordance with Art. 153(4) EPC

(43) Date of publication:
**30.04.2025  Bulletin 2025/18**

(21) Application number: **23899537.7**

(22) Date of filing: **19.09.2023**

(51) International Patent Classification (IPC):
***G06V 10/774*** *(2022.01)*

(52) Cooperative Patent Classification (CPC):
**G06N 3/0464; G06V 10/764; G06V 10/774;
G06V 10/82**

(86) International application number:
**PCT/CN2023/119709**

(87) International publication number:
**WO 2024/119954 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **08.12.2022   CN 202211574330**

(71) Applicant: ZTE Corporation
**Shenzhen, Guangdong  518057 (CN)**

(72) Inventors:
• YOU, Wei
  **Shenzhen, Guangdong 518057 (CN)**
• LIN, Wei
  **Shenzhen, Guangdong 518057 (CN)**
• XI, Zhicheng
  **Shenzhen, Guangdong 518057 (CN)**
• RUI, Hua
  **Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **TARGET DETECTION METHOD AND APPARATUS, AND TARGET DETECTION MODEL
TRAINING METHOD AND APPARATUS**

(57)     Provided in the present disclosure are a target detection method and apparatus, and a target detection model training method and apparatus. The target detection method comprises: firstly, acquiring sensing data of an area to be sensed; and obtaining a detection result according to the sensing data and a target detection model, wherein the detection result comprises a plurality of pieces of indication information, each piece of indication information corresponds to one subarea in said area, and the indication information is used for indicating whether there is a target in the subarea corresponding to the indication information.

FIG. 4

**Description**

The present disclosure claims a priority to Chinese Patent Application No. 202211574330.2, filed on December 08, 2022, which is hereby incorporated by reference in its entirety.

TECHNICAL FIELD

The present disclosure relates to the technical field of sensor, and in particular, to a target detection method and apparatus, a target detection model training method and apparatus.

BACKGROUND

In recent years, target detection has been widely used in many fields, such as fields of self-driving, robot navigation, intelligent video monitoring, industrial detection, aerospace, and many other fields. Radar detection is an important means of target detection. Radar-based target detection can analyze and process an echo signal in a radar detection area, so as to detect target information from the echo signal, and determine a range, a speed, an angle and other parameters corresponding to the target.

SUMMARY

In a first aspect, embodiments of the present disclosure provide a target detection method. The method includes:

acquiring sensing data of an area to be sensed;
obtaining a detection result according to the sensing data and a target detection model, where the detection result includes a plurality of pieces of indication information, each piece of indication information corresponds to a sub-area in the area to be sensed, and a piece of indication information is used to indicate whether there is a target in a sub-area corresponding to the piece of indication information.

In a second aspect, the embodiments of the present disclosure further provide a target detection model training method. The method includes:

acquiring a training sample set, where the training sample set includes a plurality of samples with labels, a sample includes a piece of sensing data, and a label of the sample is used to indicate whether there is a target in each sub-area in an area to be sensed corresponding to the sensing data; and
training an initial model according to the training sample set, to obtain the target detection model.

In a third aspect, the embodiments of the present disclosure further provide a target detection apparatus. The target detection apparatus includes:

a transceiving module, configured to acquire sensing data of an area to be sensed; and
a processing module, configured to obtain a detection result according to the sensing data and a target detection model, where the detection result includes a plurality of pieces of indication information, each piece of indication information corresponds to a sub-area in the area to be sensed, and a piece of indication information is used to indicate whether there is a target in a sub-area corresponding to the piece of indication information.

In a fourth aspect, the embodiments of the present disclosure further provide a target detection model training apparatus. The target detection model training apparatus includes:

a transceiving module, configured to acquire a training sample set, where the training sample set includes a plurality of samples with labels, a sample includes a piece of sensing data, and a label of the sample is used to indicate whether there is a target in each sub-area in an area to be sensed corresponding to the sensing data; and
a training module, configured to train an initial model according to the training sample set, to obtain the target detection model.

In a fifth aspect, the embodiments of the present disclosure further provide an electronic device. The electronic device includes: a memory and a processor, where the memory and the processor are coupled; the memory is used to store a computer program; and when the processor executes the computer program, the method provided in the above first aspect or second aspect is implemented.

In a sixth aspect, the embodiments of the present disclosure further provide a computer-readable storage medium. Computer instructions are stored on the computer-readable storage medium, when the computer instructions are executed on an electronic device, the electronic device is enabled to perform the method provided in the above first aspect or second aspect.

In a seventh aspect, the embodiments of the present disclosure further provide a computer program product. The computer program product includes computer program instructions, when the computer program instructions are executed by a processor, the method provided in the above first aspect or second aspect is implemented.

BRIEF DESCRIPTION OF THE DRAWINGS

The accompanying drawings are used to provide a further understanding of the technical solutions of the present disclosure, and constitute a part of the specification, which is used to explain the technical solutions of the present disclosure together with the embodiments of the present disclosure, and do not constitute a limitation on the technical solutions of the present disclosure.

FIG. 1 is a schematic diagram of a sensing system 100 according to some embodiments.

FIG. 2(a) is a schematic diagram of a sensing scenario according to some embodiments.

FIG. 2(b) is a schematic diagram of another sensing scenario according to some embodiments.

FIG. 3 is a schematic diagram of an application of a sensing system according to some embodiments.

FIG. 4 is a flowchart of a target detection method according to some embodiments.

FIG. 5 is a flowchart of another target detection method according to some embodiments.

FIG. 6 is a schematic diagram of a range-Doppler matrix according to some embodiments.

FIG. 7(a) is a schematic diagram of a division for data areas according to some embodiments.

FIG. 7(b) is a schematic diagram of another division for data areas according to some embodiments.

FIG. 8 is a structural schematic diagram of a target detection model according to some embodiments.

FIG. 9(a) is a schematic diagram of a detection result according to some embodiments.

FIG. 9(b) is a schematic diagram of another detection result according to some embodiments.

FIG. 10 is a flowchart of a target detection model training method according to some embodiments.

FIG. 11 is a structural schematic diagram of a target detection apparatus according to some embodiments.

FIG. 12 is a structural schematic diagram of a target detection model training apparatus according to some embodiments.

FIG. 13 is a structural schematic diagram of an electronic device according to some embodiments.

**DETAILED DESCRIPTION**

In order to enable those skilled in the art to better understand the technical solutions in the embodiments of the present disclosure, the technical solutions in the embodiments of present disclosure will be described clearly and completely in conjunction with the accompanying drawings in the embodiments of present disclosure. Obviously, the described embodiments are merely a part of embodiments of the present disclosure, but not all of embodiments of the present disclosure. All other embodiments obtained based on the embodiments of the present disclosure by those of ordinary skill in the art without paying any creative effort shall be included in the protection scope of the present disclosure.

In the description of the present disclosure, unless otherwise specified, "/" means an "or" relationship, for example, "A/B" may represent A or B. "And/or" herein is merely a relevant relationship for describing related objects, which represents that there may be three relationships. For example, A and/or B may represent: only A; only B; or both A and B. Terms such as "first" and "second" are used for descriptive purposes only, and are not to be understood as indicating or implying the relative importance or implicitly indicating the number of indicated technical features. Thus, features limited with "first" or "second" may explicitly or implicitly include one or more of the features. In the description of the present disclosure, unless otherwise specified, "at least one" refers to one or more, "a plurality of" and variations thereof refer to two or more than two.

In the present disclosure, wordings, such as "exemplarily" or "for example", and variations thereof are used to indicate examples, instances, or illustrations. Any embodiment or design solution described in the embodiments of the present disclosure as "exemplarily" or "for example" should not be illustrated as being more preferred or advantageous over other embodiments or design solutions. Specifically, the usage of wordings such as "exemplarily" or "for example" is intended to present relevant concepts in a concrete way.

To facilitate understanding, some basic concepts of terms or technologies involved in the embodiments of the present disclosure are first briefly introduced and explained.

1. Target detection

The target detection refers to a process of finding a target in a scenario (e.g., an image) and determining a position of the target. The target detection has been widely applied in many fields of daily life. For example, the target detection is applied in fields of self-driving, robot navigation, intelligent video monitoring, industrial detection, aerospace, and many other fields. In processes of target detection and recognition, fusion for multiple sensors is usually required to be performed. For example, taking the target detection being applied in the scenario of self-driving as an example, data harvested by a laser radar, a millimeter-wave radar, a visual sensor, an infrared sensor, etc., of a vehicle may be fused to acquire information about a surrounding environment of the vehicle, that is, to detect a target object in the surrounding environment of the vehicle. For example, a target object may be any object in the surrounding environment of the vehicle, such as a vehicle, a people, a tree, a building, etc.

2. Convolutional neural networks (convolutional neural networks, CNN)

The convolutional neural networks are a kind of feedforward neural networks that include convolution calculations and have a deep structure, which are one of the representative algorithms of deep learning. The convolutional neural networks may be applied to aspects of computer vision, such as image recognition (image classification), object recognition (object recognition), action recognition (action recognition), pose estimation (pose estimation), neural style transfer (neural style transfer), and the convolutional neural networks may also be applied to aspects such as natural language processing (natural language processing, NLP).

Generally speaking, a convolutional neural network includes an input layer, a hidden layer, and an output layer.

The input layer of the convolutional neural network may process multidimensional data. Taking image processing as an example, the input layer may receive pixel values (three-dimensional array) of an image, that is, numerical values of two-dimensional pixel points on the plane and RGB channels.

The hidden layer of the convolutional neural network includes one or more convolutional layers, one or more pooling layers, and one or more fully-connected layers. A function of a convolutional layer is to extract a feature from input data. A pooling layer is usually connected after the convolutional layer, so that after the convolutional layer performs feature extraction, output data is passed to the pooling layer for selection and information filtering. Each node in the fully-connected layer is connected to all nodes in a previous layer, so as to integrate acquired features. The fully-connected layer plays the role of a "classifier" in the entire convolutional neural network.

A structure and a working principle of the output layer of the convolutional neural network are the same as a structure and a working principle of an output of a traditional feedforward neural network. For example, for a convolutional neural network for image classification, an output layer outputs a classification label by using a logistic function or a softmax function, such as people, scenes, items, etc.

3. Radar

A radar is a device that may detect a target by using an electromagnetic wave. A transmitting antenna of the radar converts a high-frequency current signal generated by a transmitter circuit or a guided wave on a transmission line into an electromagnetic wave with a specific polarization mode that may be transmitted in space, and transmits the electromagnetic wave along a preset direction. When the electromagnetic wave encounter an obstacle in a forward direction, a part of the electromagnetic wave may be reflected back along an opposite direction of the transmission direction. At this time, a receiving antenna of the radar may receive the reflected electromagnetic wave and convert the reflected electromagnetic wave into a high-frequency current signal or a guided wave on a transmission line. By performing subsequent processing on obtained echo signals, a range, a speed, an angle and other state information of a target may be extracted.

For example, a radar may include a transmitter, a receiver and an antenna.

The transmitter is a radio device that provides a high-power radio frequency signal for the radar, which can generate a high-power radio frequency signal with modulated carriers, i.e., an electromagnetic wave. According to modulation modes, transmitters may be classified into two categories: a continuous wave transmitter and a pulse transmitter. The transmitter includes a primary radio frequency oscillator and a pulse modulator.

The receiver is a device that performs frequency conversion, filtering, amplification and demodulation in the radar. A weak high-frequency signal received by the antenna is selected from accompanying noise and interference through appropriate filtering, and is used for target detection, displaying or other radar signal processing after being performed amplification and detection.

The antenna is an apparatus in a radar device used to transmit or receive an electromagnetic wave and determine a detection direction thereof. Upon transmission, the antenna concentrates the energy and radiates the energy in a direction where illumination is required; upon reception, the antenna receives an echo from a detection direction, and distinguishes an azimuth and/or an elevation angle of a target.

4. The artificial intelligence (artificial intelligence, AI) is a kind of theory, method, technology and application system that uses a digital computer or use a machine controlled by the digital computers to simulate, extend and expands human intelligence, to sense the environment, acquire knowledge and use the knowledge to obtain a best result. In other words, the artificial intelligence is a branch of the computer science, which attempts to understand the essence of the intelligence and produce a new kind of intelligent machines that may respond in a similar way with the human intelligence. The artificial intelligence is aimed to study design principles and implementation methods of various intelligent machines, to enable machines have the functions of sensing, reasoning and decision-making. The study in the field of the artificial intelligence includes robotics, natural language processing, computer vision, decision-making and reasoning, human-computer interaction, recommendation and searching, the basic theory of AI, etc.

5. Constant false alarm rate (constant false alarm rate, CFAR)

The constant false alarm rate detection technology is a technology that a radar system distinguishes a signal output by a receiver and noise to determine whether a target signal exists while a false alarm rate is kept constant. The principle of constant false alarm rate detection technology is to process input noise to determine a threshold first, and then compare the threshold with an input signal, in a case where the input signal exceeds the threshold, it is determined that there is a target, and in a case where the input signal less than or equal to the threshold, it is determined that there is no target. Generally, a signal is sent out by a signal source, and is influenced by various interferences during a propagation process, then the signal is processed after reaching the receiver, and is output to a detector, and then, the detector then makes a judgment on the input signal based on appropriate criteria.

6. Doppler effect (Doppler effect)

The Doppler effect refers to that a wavelength radiated by an object changes due to a relative motion between a wave source and an observer. In front of a moving wave source, the wave is compressed, a wavelength of the wave becomes shorter, and a frequency of the wave becomes higher, which is called blue shift. Behind the moving wave source, an opposite effect occurs, i.e., the wavelength of the wave becomes longer, and the frequency of the wave becomes lower, which is called redshift. The higher the speed of the wave source, the greater the effect produced.

The micro-Doppler effect in the radar is a physical phenomenon caused by the micro-motion of objects and components of the radar. The micro-Doppler characteristics of a radar target are of great significance for improving the performance of detection and distinguishing capabilities of the radar, and further, improving the performance of radar imaging and target recognition.

The above is an introduction to the technical terms involved in the embodiments of the present disclosure, which will not be repeated below.

The sensing system mainly uses a radar to sense and position a target in the surrounding environment, which is also referred to as target detection. A CFAR detection technology is mainly used to perform target detection through a radar. During a detection process, whether there is a target is judged based on setting a threshold for a sensed signal. If a set threshold is exceeded, it is determined that there is a target, otherwise, it is determined that there is no target. However, if the threshold is set too high, the target may be easily missed and a missing rate in the detection process may be high. However, if the threshold is set too low, false alarms may increase, and a false alarm rate may be too high in the detection process. It can be seen that the setting for the threshold of CFAR affects both the false alarm rate and the missing rate at the same time. It is impossible to take both into account at the same time, and a result of the target detection is not ideal.

At present, with the rapid development of AI technology, AI technology has also been applied to target detection.

In some embodiments, AI technology may be used to classify radar data, and classification results may include there being a target and there being no target. However, this method cannot provide target positioning. In some other embodiments, original radar data is mapped into a 3D image, and then a neural network (e.g., a deep neural network) is used for AI detection. A scale of a detection model in this method is relatively large, and an amount of computation is also relatively large, which cannot meet real-time detection requirements of the sensing system.

Based on this, the present disclosure provides a target detection method. The method includes: first acquiring sensing data of an area to be sensed; then obtaining a detection result according to the sensing data and a target detection model, where the detection result includes a plurality of pieces of indication information, each piece of indication information corresponds to a sub-area in the area to be sensed. A piece of indication information is used to indicate whether there is a target in a sub-area corresponding to the piece of indication information. In the above method, the sensing data may be directly used for target detection, thereby improving the real-time performance and the practicality of target detection.

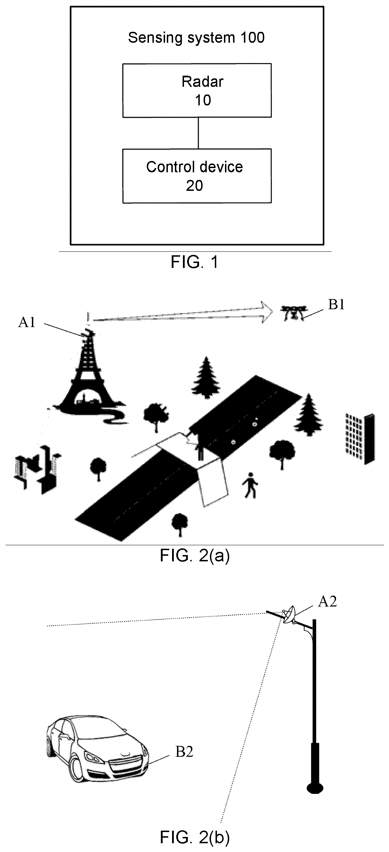

FIG. 1 is a schematic diagram of a sensing system according to some embodiments. The sensing system 100 includes: a radar 10 and a control device 20. The radar 10 is connected to the control device 20 in a wired or wireless connection.

A wireless connection may be a Bluetooth connection, a Wi-Fi connection, etc., and a wired connection may be an optical fiber connection, etc., which are not limited herein.

The radar 10 may be any one of a laser radar sensor, a millimeter-wave radar sensor, etc., or any combination thereof. The radar 10 may use an electromagnetic wave to detect a target in an area to be sensed and obtain an echo signal from the area to be sensed.

In actual usage, the radar 10 may be disposed in the area to be sensed. For example, as shown in FIG. 2(a), a radar A1 disposed on a base station may transmit a detection electromagnetic wave to the area to be sensed, and receive an echo signal generated by the drone B1 reflecting the detection electromagnetic wave in the area to be sensed. Alternatively, as shown in FIG. 2(b), a radar A2 disposed beside the road may transmit a detection electromagnetic wave to the area to be sensed, and receive an echo signal generated by an obstacle B2 (vehicle) reflecting the detection electromagnetic wave in the area to be sensed.

In some embodiments of the present disclosure, the radar 10 may adopt a millimeter-wave radar with strong anti-interference capability, strong distinguishing capability, and high measurement accuracy. The millimeter-wave radar refers to a radar that works in the millimeter wave band, which may transmit a signal with a wavelength of 1 to 10mm and a frequency of 30GHz to 300GHz. In the electromagnetic spectrum, this kind of wavelength is considered a short wavelength, and the short wavelength means high accuracy. For example, a millimeter-wave system with a working frequency of 76 GHz to 81 GHz (corresponding to a wavelength of about 4 mm) will be able to detect a moving object as small as a fraction of a millimeter.

The control device 20 is an electronic device with a data processing capability. In the embodiments of the present disclosure, the control device 20 is configured to execute the target detection method of the embodiments of the present disclosure, and perform target detection on the external environment of the area to be sensed. Alternatively, the control device 20 may further be configured to train a target detection model for performing target detection on the area to be sensed.

In some embodiments, the radar 10 may be disposed on a vehicle, a drone or other devices, and the control device 20 may be a terminal device connected to the radar 10.

In some embodiments, the sensing system 100 may be combined with the communication system 200 and disposed together in the area to be sensed. For example, the sensing system 100 may be combined with the communication system 200 and disposed together in a base station.

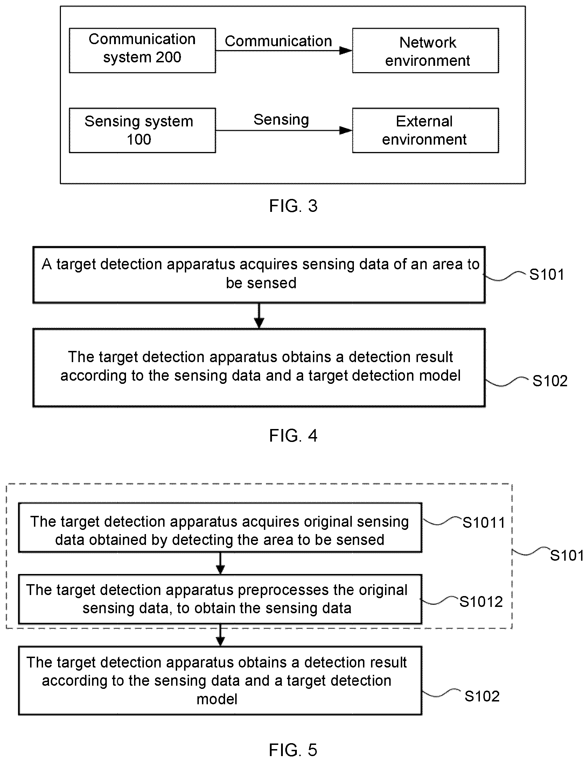

As shown in FIG. 3, the sensing system 100 is configured to sense the external environment of the area to be sensed. The sensing system 100 may use the base station to transmit a radar signal to sense the surrounding environment, obtain information of target of interest in the environment, determine a parameter of the target, such as a range, a speed, an orientation, angle of depression/elevation, etc., and classify the target. The external environment refers to a set of targets and background parameters of a current serving cell, including a number of targets, a target motion parameter, a target distribution, etc.

In addition, the communication system 200 provides services to communication users such as vehicles, pedestrians, and buildings within the cell, thereby enabling communication between these users and the network. Network parameters of the network environment may include a set of parameters related to communication participants, such as a current number of users, a current number of online users, a current network load, and user distribution.

The embodiments of the present disclosure further provide a target detection apparatus. The target detection apparatus is an execution subject of the above target detection control method. The target detection apparatus is an electronic device with a data processing capability. For example, the target detection apparatus may be the control device 20 in the above-mentioned sensing system 100, or the target detection apparatus may be a functional module in the control device 20, or the target detection apparatus may be any computing device connected to the control device 20, etc., which is not limited in the embodiments of the present disclosure.

In addition, for the target detection model in the above-mentioned target detection method, the embodiments of the present disclosure further provide a target detection model training apparatus (for simple description, referred to as a training apparatus hereinafter). The training apparatus may be used to train the target detection model and provide a trained target detection model suitable for a sensing scenario. Furthermore, the training apparatus may also be an electronic device module with a data processing capability, or may be a functional module in the electronic device, which is not limited herein.

In some embodiments, the above-mentioned target detection apparatus and the above-mentioned training apparatus may be integrated into a device. Alternatively, the above-mentioned target detection apparatus and the training apparatus may be two independent devices.

The target detection method provided in the present disclosure will be illustrated below in detail in combination with the accompanying drawings of the description.

FIG. 4 is a target detection method according to some embodiments, where the method includes S101 and S102.

In S101, a target detection apparatus acquires sensing data of an area to be sensed.

The above-mentioned area to be sensed refers to an area that may be sensed by the sensing system shown in FIG. 1. This area is within an area that may be detected by the radar 10.

In actual usage, a radar usually transmits an electromagnetic wave periodically. When the electromagnetic wave encounters an obstacle in the forward direction, a part of the electromagnetic wave will be reflected back along an opposite direction of the transmission direction. The electromagnetic wave reflected by a target object in the area to be sensed is an echo signal received by the radar, and after signal processing is performed on the echo signal, the required sensing data may be obtained.

For example, for a sensing system used to detect house intrusion, the radar may continuously detect a door or the surrounding environment (that is, the area to be sensed) of the house, to determine a moving object that may invade the house. The above-mentioned sensing data is data acquired by the radar through detection for the door or the surrounding environment of the house. For another example, for a target detection system for a self-driving vehicle, a sensing system in the vehicle may continuously sense obstacles around the vehicle to assist the vehicle in sensing the surrounding environment during driving, to drive safely and automatically on the lane. In the target detection system, the area to be sensed refers to an area in the surrounding environment of the vehicle where target detection is being performed. Furthermore, the sensing data is data acquired by a radar installed on the vehicle to detect the area to be sensed.

It can be understood that the sensing data may include data obtained by sensing any target existing in the area to be sensed. Therefore, the target detection apparatus may acquire the sensing data of the area to be sensed, and detect a target in the area to be sensed based on the sensing data.

In some embodiments, the target detection apparatus may first acquire original sensing data in the area to be sensed, and then obtain the above-mentioned sensing data based on the original sensing data. For example, as shown in FIG. 5, the above-mentioned S101 may be, for example, implemented as S1011 to S1012.

In S1011, the target detection apparatus acquires original sensing data obtained by detecting the area to be sensed.

As an example, the above-mentioned original sensing data may be range-Doppler matrix (range-Doppler matrix, RDM) data.

For example, the target detection apparatus may send a linear frequency modulation signal through a radar to detect the area to be sensed, and receive an echo signal reflected by a target in the area to be sensed. Furthermore, the target detection apparatus may organize the received radar echo signal into a radar cube, and extract spatial distribution information and Doppler information of the received radar echo signal to obtain the range-Doppler matrix. Moreover, each element in the range-Doppler matrix is a complex number, that is, the original sensing data is complex number data.

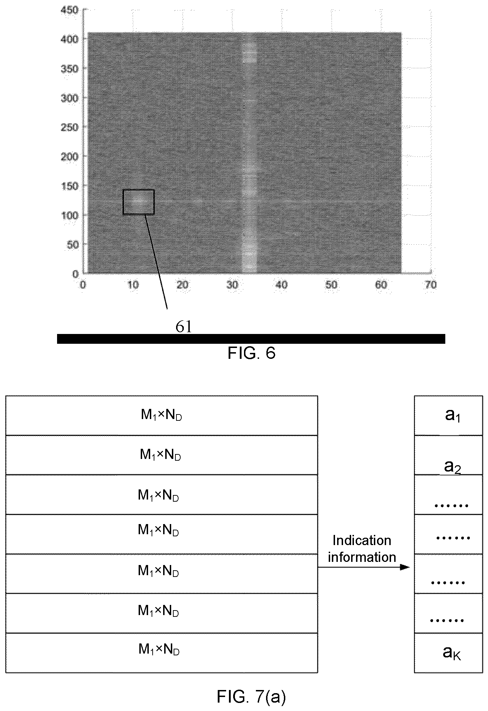

FIG. 6 is a schematic diagram of a range-Doppler matrix. As shown in FIG. 6, a range bin and a Doppler bin in the range-Doppler matrix are used as a coordinate position to form a range dimension and a Doppler dimension. Each square in the range-Doppler matrix in FIG. 6 corresponds to a point in the range-Doppler matrix, and respective points in the range-Doppler matrix have different coordinate positions (range bins, Doppler bins). Furthermore, respective points in the range-Doppler matrix may further have amplitudes.

In S1012, the target detection apparatus preprocesses the original sensing data, to obtain the sensing data.

As an example, the sensing data is obtained by processing data of respective elements in the range-Doppler matrix data with modular operation, logarithmic operation and absolute value operation in sequence.

For example, the above-mentioned target detection apparatus may preprocess the original sensing data by using the following formula (1).

$$X(m_R, n_D) = \left| \log_{10} |X_0(m_R, n_D)| \right| \qquad \text{Formula (1)}$$

In the above formula, $X(m_R, n_D)$ is the sensing data, $X_0(m_R, n_D)$ is the original sensing data, $m_R$ is a number of range bins, and $n_D$ is a number of Doppler bins.

It should be noted that, based on the relevant description for S1011 above, it can be known that the original sensing data is complex number data. Since a data processing procedure for the complex number is relatively complicated, the complex number data (i.e., the original sensing data) may be converted into real number data (i.e., the sensing data) through the above preprocessing procedure to improve a processing speed of the target detection model.

In S102, the target detection apparatus obtains a detection result according to the sensing data and a target detection model.

The above-mentioned detection result includes a plurality of pieces of indication information, each piece of indication information corresponds to a sub-area in the area to be sensed, and a piece of indication information is used to indicate whether there is a target in a sub-area corresponding to the piece of indication information.

In addition, the above-mentioned target may be any target such as a vehicle, a people, a tree, etc., in the area to be sensed. As an example, for the same area to be sensed, one or more target detection models may be used to perform target detection, and different target detection models are suitable for different types of targets. For example, in an area to be sensed, a target detection model for performing target detection on vehicles, a target detection model for performing target detection on people, and a target detection model for performing target detection on both vehicles and people may all be included.

For example, the detection result Y may be expressed as the following formula (2).

$$\mathbf{Y} = \begin{bmatrix} a_1, & a_2, & \ldots, & a_K \end{bmatrix}^{\mathrm{T}} \qquad \text{Formula (2)}$$

In the above-mentioned formula, a k-th piece of indication information may be $a_k \in \{0,1\}$, k=1, 2, ..., K. When $a_k$ is 1, it indicates that there is a target in a k-th sub-area corresponding to the k-th piece of indication information. Alternatively, when $a_k$ is 0, it indicates that there is no target in the k-th sub-area corresponding to the k-th piece of indication information.

In some embodiments, the sensing data may be divided into a plurality of data areas, and each piece of indication information mentioned above corresponds to a data area in the sensing data, and each data area in the sensing data corresponds to a sub-area in the area to be sensed.

As an example, the sensing data may be divided into a plurality of data areas in a range dimension.

For example, as shown in FIG. 7(a), the sensing data may be divided into K segments in the range dimension. In the above formula, a total number of range bins of the sensing data is $M_R$, and a number of Doppler bins is $N_D$. Furthermore, a number of range bins included in each segment of the sensing data is $M_1$, that is, a number of range bins included in each data area is $M_1$, and a number of included Doppler bins is $N_D$. In addition, K is a positive integer, and $K = \left[\frac{M_R}{M_1}\right]$. As shown in FIG. 7(a), respective pieces of indication information corresponding to the respective data areas of the sensing data are $a_1$, $a_2$, ..., $a_K$, respectively.

As another example, the sensing data is divided into a plurality of data areas in the range dimension and the Doppler dimension.

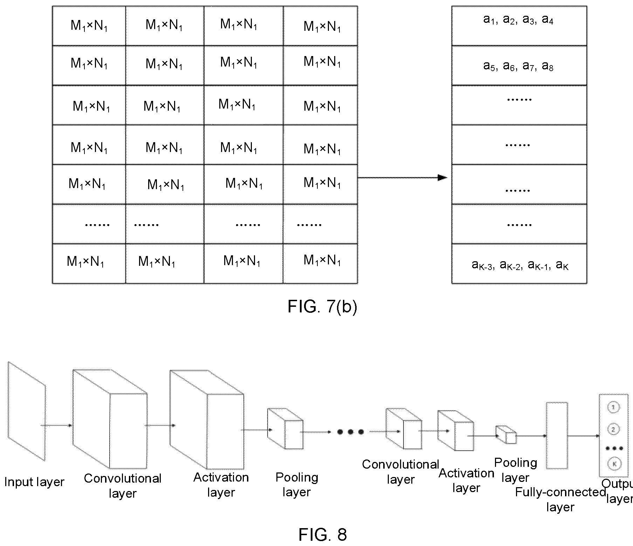

For example, as shown in FIG. 7(b), the sensing data may be divided into X segments in the range dimension, and divided into Y segments in the Doppler dimension. A total number of range bins of the sensing data is $M_R$, and a number of Doppler bins is $N_D$. Furthermore, a number of range bins included in each data area is $M_2$, and a number of included Doppler bins is $N_2$. In addition, X, Y are positive integers, and $X = \left[\frac{M_R}{M_2}\right]$, $Y = \left[\frac{N_D}{N_2}\right]$. In addition, X×Y=K, that is, there are K data areas in total.

For example, as shown in FIG. 7(b), indication information corresponding to four data areas in the first row are $a_1$, $a_2$, $a_3$ and $a_4$, indication information corresponding to four data areas in the second row are $a_5$, $a_6$, $a_7$, and $a_8$, ..., and indication information corresponding to four data areas in the last row are $a_{K-3}$, $a_{K-2}$, $a_{K-1}$, and $a_K$.

It should be noted that the purpose of dividing the sensing data into the plurality of data areas in the embodiments of the present disclosure is to ensure that there is only one target in a sub-area corresponding to one data area. Therefore, a number and division mode of the above data areas may be determined based on a presence situation of targets in a sensing scenario. In a case where targets in the sensing scenario are relatively sparse, such as performing target detection for drones, the sensing data may be divided into a fewer number of data areas. For example, the sensing data may be divided into a fewer number of data areas in the range dimension. Alternatively, in a case where the targets in the sensing scenario are relatively dense, such as performing target detection for pedestrians or vehicles, the sensing data may be divided into a larger number of data areas. For example, the sensing data may be divided into the plurality of data areas in the range dimension and the Doppler dimension. Therefore, the division for the data areas may be based on the sensing scenario in the embodiments of the present disclosure, so as to determine an appropriate size of a data area, thereby improving the accuracy of target detection.

In some embodiments, in a case where a piece of indication information is used to indicate that there is a target in a sub-area corresponding to the piece of indication information, position information of the target is determined according to a coordinate of an element with a largest value in a data area of the sensing data corresponding to the piece of indication information.

The target detection apparatus may determine a coordinate of a point in the sub-area and corresponding to a point with a maximum amplitude in the range-Doppler matrix, and use the coordinate as the position information of the target.

In some embodiments, the above-mentioned target detection model may be constructed based on convolutional neural networks.

For example, as shown in FIG. 8, the target detection model includes an input layer, a plurality of hidden layers, a fully-connected layer, and an output layer, and an input of the input layer is preprocessed data in which a dimension is $[M_R \times N_D]$. A hidden layer includes a convolutional (Conv) layer, an activation layer, and a pooling layer.

The convolution layer L1 (P1, P1) means that a number of convolution kernel(s) is L1 and a convolution kernel size is (P1, P1).

The pooling layer uses maximum pooling, and a pooling size may be (2, 2). In addition, an activation function of the activation layer adopts a Rectified Linear Unit (Rectified Linear Unit, ReLU) function. The ReLU function, also referred to as a rectified linear unit, is a commonly used activation function in artificial neural networks. The ReLU function usually refers to a nonlinear function represented by a variant of a ramp function and is a nonlinear activation function. The ReLU function may simulate a more accurate activation model of brain neurons receiving signals from a biological perspective. For example, the ReLU function may be expressed as the following formula (3).

$$f(x) = \max(0, x) \qquad \text{Formula (3)}$$

The activation function of the fully-connected layer uses the sigmoid function. The sigmoid function, which is the most widely used type of activation functions, has a shape of an exponential function, and is physically closest to biological neurons. The sigmoid function is an S-shaped function commonly seen in biology, which is also referred to as an S-shaped growth curve, and has been widely used in logistic regression and artificial neural networks. For example, the sigmoid function may be expressed as the following formula (4).

$$S(t) = \frac{1}{1 + e^{-t}} \qquad \text{Formula (4)}$$

A loss function used in the fully-connected layer is cross entropy, and a calculation formula of the loss function may be expressed as follows:

$$\text{Loss} = -\frac{1}{O_S} \sum_{i=1}^{O_S} \left( y_i \log \hat{y}_i + (1 - y_i) \log(1 - \hat{y}_i) \right) \qquad \text{Formula (5)}$$

In the above-mentioned formula, $O_S$ is a size of an output, $y_i$ is a sample true value, and $\hat{y}_i$ is a predicted value output by the model.

It can be understood that what is shown in FIG. 8 is only one possible structure of the target detection model provided in the embodiments of the present disclosure, and the target detection model may also have other possible structures, which is not limited in the present disclosure.

As an example, in a case where targets in the sensing scenario are relatively sparse, such as during a process of performing target detection for drones, the target detection model may include 2 hidden layers, and network parameters of the 2 hidden layers may be as shown in Table 1 below.

Table 1

| First layer | | | | |
|---|---|---|---|---|
| Number of convolution kernels | Convolution kernel size | Activation function | Pooling function | Pooling kernel size |
| 6 | 12×12 | ReLU | Max | 2×2 |
| Second layer | | | | |
| Number of convolution kernels | Convolution kernel size | Activation function | Pooling function | Pooling kernel size |
| 6 | 6×6 | ReLU | Max | 2×2 |

As another example, in a case where targets in the sensing scenario are relatively dense, such as during a process of performing target detection for pedestrians or vehicles, etc., the target detection model may include 3 hidden layers, and network parameters of the 3 hidden layers may be shown in Table 2 below.

Table 2

| First layer | | | | |
|---|---|---|---|---|
| Number of convolution kernels | Convolution kernel size | Activation function | Pooling function | Pooling kernel size |
| 32 | 6×6 | ReLU | Max | 2×2 |
| Second layer | | | | |
| Number of convolution kernels | Convolution kernel size | Activation function | Pooling function | Pooling kernel size |
| 16 | 3×3 | ReLU | Max | 2×2 |
| Third layer | | | | |
| Number of convolution kernels | Convolution kernel size | Activation function | Pooling function | Pooling kernel size |
| 8 | 3×3 | ReLU | Max | 2×2 |

In the embodiments of the present disclosure, in this method, on the one hand, a target detection result of whether there are targets in the respective sub-areas included in the detection result of performing target detection on the sensing data is relatively accurate. Furthermore, the targets included in the respective sub-areas may be positioned based on the data areas corresponding to the respective sub-areas. On the other hand, in this method, sensing data with any size may be performed target detection without converting the sensing data into three-dimensional images or performing data processing such as suppressing clutter, which can reduce the amount of computation in a target detection process, and has good real-time performance and strong practicality.

A set of measured data is taken as an example below to illustrate a comparison between a detection result based on the target detection method provided in the present disclosure and a detection result based on the CFAR detection technology. For example, there is a real target at a position of a box 61 in FIG. 6. An abscissa shown in FIG. 6 indicates a Doppler bin, that is, $N_D$ in the sensing data is 64, and an ordinate indicates a range bin, that is, $M_R$ is 408. According to the above target detection method, the sensing data may be divided into 34 data areas, that is, K=34.

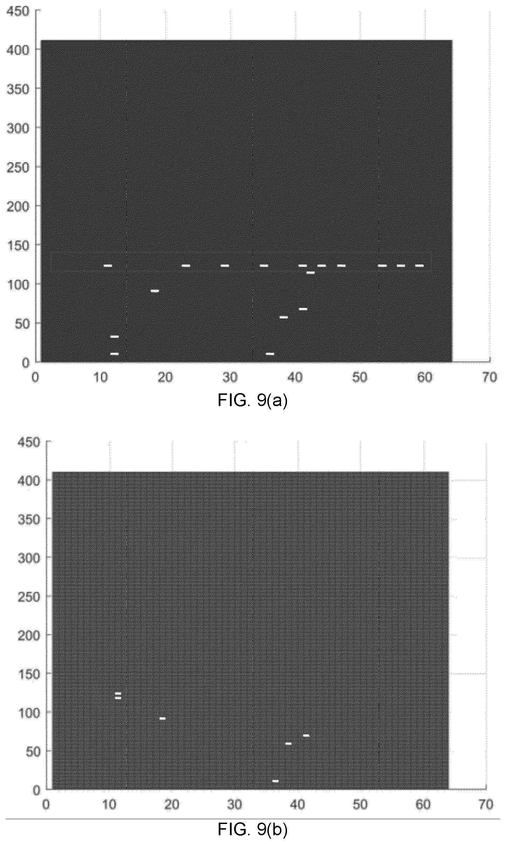

FIG. 9(a) shows a detection result based on the CFAR algorithm. As shown in FIG. 9(a), a large number of false alarms are detected at the real target position, and these false alarms are caused by strong side lobes of targets. In addition, a total number of targets given in FIG. 9(a) is 17. FIG. 9(b) shows a detection result based on the above-mentioned target detection method. As shown in FIG. 9(b), a result detected at the real target position shows that a number of the false alarms is significantly reduced. A total number of targets given in FIG. 9(b) is 6. It can be seen that in the embodiments of the present disclosure, an output of the number of false alarms can be reduced, which can improve the accuracy of the target detection result, and reduce subsequent additional amount of calculation generated based on false alarm data.

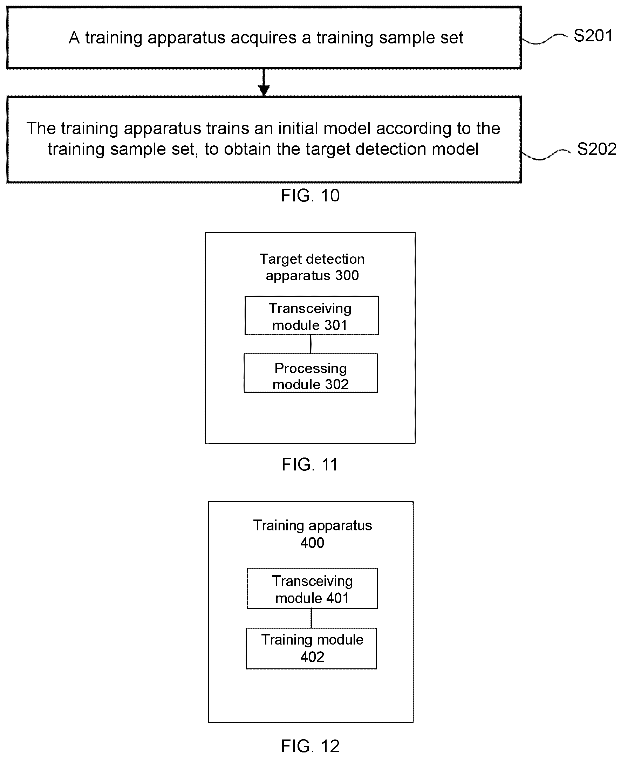

In some embodiments, the embodiments of the present disclosure further provide a target detection model training method, as shown in FIG. 10, the training method includes S201 to S202.

In S201, a training apparatus acquires a training sample set.

The training sample set includes a plurality of samples with labels. Furthermore, a sample includes a piece of sensing data, and a label of the sample is used to indicate whether there is a target in each sub-area in an area to be sensed corresponding to the piece of sensing data. Furthermore, the above-mentioned target may be any target such as a vehicle, a people, a tree, etc., in the area to be sensed.

Furthermore, the above-mentioned area to be sensed refers to an area that may be sensed by the sensing system shown in FIG. 1. The area is within an area that may be detected by the radar 10.

It should be noted that, in practical applications, the area to be sensed is the same area to be sensed in the above S101. Alternatively, the area to be sensed may also be an area to be sensed similar to the area to be sensed in the above S101.

In some embodiments, the training apparatus may also first acquire original sensing data in the area to be sensed, and then obtain the above-mentioned sensing data based on the original sensing data. The detailed process of acquiring the sensing data may refer to the relevant descriptions in S1011 to S1012 above, which will not be repeated herein.

In some embodiments, the sensing data may be divided into a plurality of data areas, and each piece of indication information mentioned above corresponds to a data area in the sensing data, and each data area in the sensing data corresponds to a sub-area in the area to be sensed.

As an example, the sensing data may be divided into a plurality of data areas in a range dimension.

As another example, the sensing data is divided into a plurality of data areas in the range dimension and the Doppler dimension.

In some embodiments, a label of a sample is used to indicate whether there is a target in a sub-area of the area to be sensed corresponding to each data area in the sensing data.

It can be understood that, for a sample, after the sensing data is divided into the plurality of data areas, the label of the sample may be obtained according to whether there is a target in each data area.

The label may be, for example, the data shown in the above formula (2) or data in other possible forms. As shown in formula (2), the label includes a plurality of elements. An element is used to indicate whether there is a target in a sub-area of the area to be sensed corresponding to a data area. It can be understood that if there is a target in a sub-area of the area to be sensed corresponding to a data area, an element corresponding to the data area is 1. If there is no target in the sub-area of the area to be sensed corresponding to the data area, the element corresponding to the data area is 0.

In some embodiments, the training apparatus may directly acquire a plurality pieces of sensing data of the area to be sensed and marked with labels, and determine these pieces of sensing data with labels as the above-mentioned training sample set.

Alternatively, the training apparatus may first acquire a plurality pieces of sensing data of the area to be sensed and that is not marked with labels, and then display the acquired plurality of pieces of sensing data to a user, and receive a plurality of pieces of sensing data of the area to be sensed and that is marked by the user with labels to obtain a training sample set.

It should be noted that, for a plurality of target detection models for detecting different targets in the same area to be sensed, labels of the same sample may be different. For example, for a target detection model for performing target detection on vehicles, a label of the sample is used to indicate whether there is a vehicle in each sub-area. Alternatively, for a target detection model for performing target detection on people, a label of the sample is used to indicate whether there is a people in each sub-area.

In S202, the training apparatus trains an initial model according to the training sample set, to obtain the target detection model.

As an example, the target detection model is constructed based on convolutional neural networks.

For example, the initial model may adopt the structure shown in FIG. 8 above.

In some embodiments, a process of training a target detection model to be trained according to training samples includes S1 to S5.

In S1, the training apparatus acquires an initial model to be trained and a training sample set.

In S2, the training apparatus inputs a first sample in the training sample set into the initial model to be trained, to obtain a predicted detection result of the first sample.

The first sample is any sample in the training sample set, that is, any piece of sensing data.

In S3, the training apparatus determines a loss value by comparing the predicted detection result of the first sample output by the initial model with a label of the first sample.

In S4, the training apparatus adjusts a model parameter of the initial model according to the above loss value.

In S5, the training apparatus uses another sample in the training sample set as a new first sample, and repeatedly performs operations S1 to S5 until the model converges.

The training apparatus may determine whether the model converges based on the loss value output each time during the initial model process, or determine whether the model converges based on a number of training times, which is not limited in the embodiments of the present disclosure.

For example, when the loss value is less than a loss value threshold, the training apparatus may determine that the model converges.

As another example, when the number of training times exceeds a threshold of a number of times, the training apparatus may determine that the model converges.

In this way, the training apparatus may determine the converged model as the trained target detection model.

Based on the above embodiments, a sample may be divided into the plurality of data areas with different sizes based on different sensing scenarios, so that the target recognition model trained based on the sample has higher accuracy, which is convenient for positioning targets included in the sub-areas based on the data areas corresponding to the respective sub-areas.

It can be understood that, in order to achieve the above functions, the target detection apparatus and the training apparatus includes corresponding hardware and/or software modules for implementing various functions. Those skilled in the art should easily realize that the present disclosure may be implemented in the form of hardware or a combination of hardware and computer software in combination with algorithms and steps described in the embodiments of the present disclosure. Whether a certain function is implemented by hardware or by computer software driving hardware depends on the specific application and design constraint conditions of the technical solutions. Professional technicians may use different methods to implement the described functions for each specific application, but such implementation should not be considered beyond the scope of the present disclosure.

The target detection apparatus or the training apparatus in the embodiments of the present disclosure may be divided into functional modules according to the above method embodiments. For example, division of each functional modules may be performed corresponding to each function, or two or more functions may be integrated into a functional module. The integrated module may be implemented in the form of hardware, or may be implemented in the form of software. It should be noted that the division of the modules in the embodiments of the present disclosure is illustrated, which is only a logical functional division, and there may be other division manners in an actual implementation. The following is illustrated by taking an example of a division of each functional module corresponding to each function.

FIG. 11 is a structural schematic diagram of a target detection apparatus according to some embodiments. The target detection apparatus may perform the target detection method provided in the above method embodiments. As shown in FIG. 11, the target detection apparatus 300 includes a transceiving module 301 and a processing module 302.

In some embodiments, the transceiving module 301 is configured to acquire sensing data of an area to be sensed. The processing module 302 is configured to obtain a detection result according to the sensing data and a target detection model, where the detection result includes a plurality of pieces of indication information, each piece of indication information corresponds to a sub-area in the area to be sensed, and a piece of indication information is used to indicate whether there is a target in a sub-area corresponding to the piece of indication information.

FIG. 12 is a structural schematic diagram of a training apparatus 400 according to some embodiments. The apparatus 400 may include: a transceiving module 401 and a training module 402.

In some embodiments, the transceiving module 401 is configured to acquire a training sample set, where the training sample set includes a plurality of samples with labels. A sample includes a piece of sensing data, and a label of the sample is used to indicate whether there is a target in each sub-area in an area to be sensed corresponding to the sensing data. The training module 402 is configured to train an initial model according to the training sample set, to obtain the target detection model.

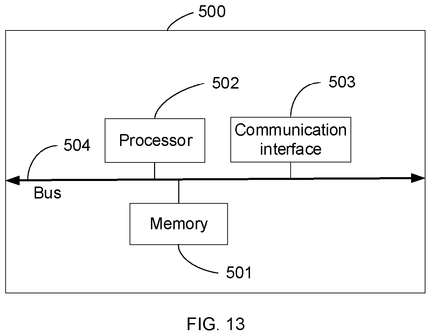

In a situation where the functions of the above-mentioned integrated modules are implemented in the form of hardware, the embodiments of the present disclosure provide an electronic device, where the electronic device may be the above-mentioned target detection apparatus or the training apparatus. As shown in FIG. 13, the electronic device 500 includes a processor 502 and a bus 504. In some embodiments, the electronic device may further include a memory 501. In some embodiments, the electronic device may further include a communication interface 503.

The processor 502 may be various exemplary logical blocks, modules and circuits described for implementing or executing the embodiments of the present disclosure. The processor 502 may be a central processor, a general-purpose processor, a digital signal processor, an application specific integrated circuit, a field programmable gate array, or other programmable logic components, a transistor logic component, a hardware assembly, or any combination thereof. The processor 502 may implement or perform various exemplary logical blocks, modules and circuits described in combination with the embodiments of the present disclosure. The processor 502 may also be a combination that implements computing functions, for example, a combination including one or more microprocessors, a combination of a DSP (digital signal processor) and a microprocessor, or the like.

The communication interface 503 is configured to connect with other devices through a communication network. The communication network may be Ethernet, a wireless access network, a wireless local area network (wireless local area network, WLAN), or the like.

The memory 501 may be a read-only memory (read-only memory, ROM) or other types of static storage devices that may store static information and instructions, a random access memory (random access memory, RAM), or other types of dynamic storage devices that may store information and instructions, or an electrically erasable programmable read-only memory (electrically erasable programmable read-only memory, EEPROM), a magnetic disk storage medium or any other magnetic storage devices, or any other media that may be used to carry or store desired program codes with instructions or data and may be accessed by a computer, which is not limited thereto.

As an example, the memory 501 may exist independently from the processor 502, and the memory 501 may be connected to the processor 502 through the bus 504 for storing instructions or program codes. When the processor 502 invokes and executes the instructions or program codes stored in the memory 501, the processor 502 may implement the multi-target trajectory decomposition observation method provided in the embodiments of the present disclosure.

As another example, the memory 501 may be integrated with the processor 502.

The bus 504 may be an extended industry standard architecture (extended industry standard architecture, EISA) bus, or the like. The bus 504 may be classified as an address bus, a data bus, a control bus, or the like. For ease of representation, only one bold line is used in FIG. 13 for representing the bus 504, which however does not mean that there is only one bus or one type of bus.

Some embodiments of the present disclosure provide a computer-readable storage medium (for example, a non-transitory computer-readable storage medium), where the computer-readable storage medium has stored computer program instructions, and the computer program instructions, upon being executed by a computer, enable the computer to perform the multi-target trajectory decomposition observation method as described in any one of the above embodiments.

For example, the above-mentioned computer-readable storage medium may include, but not limited to: a magnetic storage device (e.g., a hard disk, a floppy disk, or a magnetic tape, etc.), an optical disk (e.g., a compact disk (compact disk, CD), a digital versatile disk (digital versatile disk, DVD), etc.), a smart card and a flash memory device (e.g., an erasable programmable read-only memory (erasable programmable read-only memory, EPROM), a card, a stick or a key driver, etc.). The various computer-readable storage media described in the present disclosure may represent one or more devices for storing information and/or other machine-readable storage media for storing information. The term "machine-readable storage medium" may include, but not limited to, a wireless channel and various other media capable of storing, containing, and/or carrying instructions and/or data.

Some embodiments of the present disclosure provide a computer program product including instructions, where when the computer program product is run on a computer, so as to enable the computer to perform the multi-target trajectory decomposition observation method as described in any one of the above embodiments.

The above descriptions are merely specific implements of the present disclosure, but the scope of protection of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

**Claims**

1. A target detection method, **characterized by** comprising:

    acquiring sensing data of an area to be sensed;
    obtaining a detection result according to the sensing data and a target detection model, wherein the detection result includes a plurality of pieces of indication information, each piece of indication information corresponds to a sub-area in the area to be sensed, and a piece of indication information is used to indicate whether there is a target in the sub-area corresponding to the piece of indication information.

2. The method according to claim 1, wherein the acquiring the sensing data of the area to be sensed further comprises:

    acquiring original sensing data obtained by detecting the area to be sensed;
    preprocessing the original sensing data, to obtain the sensing data.

3. The method according to claim 2, wherein the original sensing data is range-Doppler matrix data;
   wherein preprocessing the original sensing data, to obtain the sensing data that has been preprocessed comprises:
   processing data of respective elements in the range-Doppler matrix data with modular operation, logarithmic operation and absolute value operation in sequence, to obtain the sensing data.

4. The method according to claim 3, wherein the each piece of indication information corresponds to a data area in the sensing data, and each data area in the sensing data corresponds to a sub-area in the area to be sensed.

5. The method according to claim 4, wherein the sensing data is divided into a plurality of data areas in a range dimension.

6. The method according to claim 4, wherein the sensing data is divided into a plurality of data areas in a range dimension and a Doppler dimension.

7. The method according to any one of claims 4 to 6, wherein in a case where the piece of indication information is used to indicate that there is a target in the sub-area corresponding to the piece of indication information, position information of the target is determined according to a coordinate of an element with a largest value in a data area of the sensing data corresponding to the piece of indication information.

8. The method according to claim 1, wherein the target detection model is constructed based on a convolutional neural network.

9. A target detection model training method, **characterized by** comprising:

acquiring a training sample set, wherein the training sample set includes a plurality of samples with labels, a sample include a piece of sensing data, and a label of the sample is used to indicate whether there is a target in each sub-area in an area to be sensed corresponding to the sensing data; and
training an initial model according to the training sample set, to obtain the target detection model.

10. The method according to claim 9, wherein the target detection model is constructed based on a convolutional neural network.

11. The method according to claim 9, wherein the label of the sample is used to indicate whether there is a target in a sub-area of the area to be sensed corresponding to each data area in the sensing data.

12. The method according to claim 11, wherein the sensing data is divided into a plurality of data areas in a range dimension.

13. The method according to claim 11, wherein the sensing data is divided into a plurality of data areas in a range dimension and a Doppler dimension.

14. An electronic device, **characterized by** comprising: a processor and a memory for storing instructions executable by the processor; wherein
the processor is configured to execute the instructions, to enable the electronic device to perform the method according to any one of claims 1 to 13.

15. A computer-readable storage medium, **characterized in that** computer instructions are stored on the computer-readable storage medium, when the computer instructions are executed on an electronic device, the electronic device is enabled to perform the method according to any one of claims 1 to 13.

FIG. 1

FIG. 2(a)

FIG. 2(b)

Communication system 200 — Communication → Network environment

Sensing system 100 — Sensing → External environment

FIG. 3

A target detection apparatus acquires sensing data of an area to be sensed — S101

↓

The target detection apparatus obtains a detection result according to the sensing data and a target detection model — S102

FIG. 4

The target detection apparatus acquires original sensing data obtained by detecting the area to be sensed — S1011

↓

The target detection apparatus preprocesses the original sensing data, to obtain the sensing data — S1012

S101

↓

The target detection apparatus obtains a detection result according to the sensing data and a target detection model — S102

FIG. 5

61

FIG. 6

| $M_1 \times N_D$ | $a_1$ |
|---|---|
| $M_1 \times N_D$ | $a_2$ |
| $M_1 \times N_D$ | ...... |
| $M_1 \times N_D$ | ...... |
| $M_1 \times N_D$ | ...... |
| $M_1 \times N_D$ | ...... |
| $M_1 \times N_D$ | $a_K$ |

Indication information

FIG. 7(a)

| | | | |
|---|---|---|---|
| $M_1 \times N_1$ | $M_1 \times N_1$ | $M_1 \times N_1$ | $M_1 \times N_1$ |
| $M_1 \times N_1$ | $M_1 \times N_1$ | $M_1 \times N_1$ | $M_1 \times N_1$ |
| $M_1 \times N_1$ | $M_1 \times N_1$ | $M_1 \times N_1$ | $M_1 \times N_1$ |
| $M_1 \times N_1$ | $M_1 \times N_1$ | $M_1 \times N_1$ | $M_1 \times N_1$ |
| $M_1 \times N_1$ | $M_1 \times N_1$ | $M_1 \times N_1$ | $M_1 \times N_1$ |
| ...... | ...... | ...... | ...... |
| $M_1 \times N_1$ | $M_1 \times N_1$ | $M_1 \times N_1$ | $M_1 \times N_1$ |

| |
|---|
| $a_1, a_2, a_3, a_4$ |
| $a_5, a_6, a_7, a_8$ |
| ...... |
| ...... |
| ...... |
| ...... |
| $a_{K-3}, a_{K-2}, a_{K-1}, a_K$ |

FIG. 7(b)

Input layer    Convolutional layer    Activation layer    Pooling layer    Convolutional layer    Activation layer    Pooling layer    Fully-connected layer    Output layer

FIG. 8

FIG. 9(a)

FIG. 9(b)

A training apparatus acquires a training sample set                    S201

The training apparatus trains an initial model according to the
training sample set, to obtain the target detection model              S202

FIG. 10

Target detection
apparatus 300

Transceiving
module 301

Processing
module 302

FIG. 11

Training apparatus
400

Transceiving
module 401

Training module
402

FIG. 12

500

502

503

504

Processor

Communication
interface

Bus

Memory

501

FIG. 13

## INTERNATIONAL SEARCH REPORT

| | International application No. |
|---|---|
| | **PCT/CN2023/119709** |

**A.    CLASSIFICATION OF SUBJECT MATTER**

G06V 10/774(2022.01)i

According to International Patent Classification (IPC) or to both national classification and IPC

**B.    FIELDS SEARCHED**

Minimum documentation searched (classification system followed by classification symbols)

IPC: G06V10/-

Documentation searched other than minimum documentation to the extent that such documents are included in the fields searched

Electronic data base consulted during the international search (name of data base and, where practicable, search terms used)

CNABS; CNTXT; CNKI; TWABS; DWPI; VEN; USTXT; WOTXT; EPTXT; IEEE; 百度, BAIDU: 距离多普勒二维矩阵, 模型, 卷积神经网络, 标签, 目标, 物体, 识别, 检测, 分类, 训练, range-doppler matrix, RDM, model, convolutional neural network, CNN, tag, label, target, object, recognition, detect, classify, train

**C.    DOCUMENTS CONSIDERED TO BE RELEVANT**

| Category* | Citation of document, with indication, where appropriate, of the relevant passages | Relevant to claim No. |
|---|---|---|
| X | CN 111368653 A (HANGZHOU DIANZI UNIVERSITY) 03 July 2020 (2020-07-03) description, paragraphs 61-107, and figures 1-3 | 1-15 |
| X | CN 113808174 A (HANGZHOU DIANZI UNIVERSITY) 17 December 2021 (2021-12-17) description, paragraphs 105-199, and figures 1-3 | 1-15 |
| X | CN 114677419 A (HANGZHOU DIANZI UNIVERSITY) 28 June 2022 (2022-06-28) description, paragraphs 59-94, and figures 1-3 | 1-15 |
| A | CN 112132093 A (HUNAN INSTITUTE OF METEOROLOGICAL SCIENCES) 25 December 2020 (2020-12-25) entire document | 1-15 |
| A | KR 102141163 B1 (AGENCY FOR DEFENSE DEVELOPMENT) 04 August 2020 (2020-08-04) entire document | 1-15 |

☐ Further documents are listed in the continuation of Box C.         ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 November 2023** | **26 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/119709**

| Patent document cited in search report | | | Publication date (day/month/year) | Patent family member(s) | | | Publication date (day/month/year) |
|---|---|---|---|---|---|---|---|
| CN | 111368653 | A | 03 July 2020 | CN | 111368653 | B | 08 September 2023 |
| CN | 113808174 | A | 17 December 2021 | None | | | |
| CN | 114677419 | A | 28 June 2022 | None | | | |
| CN | 112132093 | A | 25 December 2020 | None | | | |
| KR | 102141163 | B1 | 04 August 2020 | None | | | |

Form PCT/ISA/210 (patent family annex) (July 2022)

**REFERENCES CITED IN THE DESCRIPTION**

**Patent documents cited in the description**

- CN 202211574330